# EUROPÄISCHE PATENTSCHRIFT

(11) **EP 3 173 796 B1**
(45) Veröffentlichungstag und Bekanntmachung des Hinweises auf die Patenterteilung: **05.06.2019**
(21) Anmeldenummer: 15196646.2
(22) Anmeldetag: 27.11.2015
(51) Int. Cl.: G01P 3/487, G01C 22/00, B62J 99/00, B62H 5/20

(54) **SENSORSYSTEM ZUR MONTAGE AN EINEM FAHRRAD**
SENSOR SYSTEM FOR MOUNTING ON A BICYCLE
SYSTEME DE CAPTEUR DESTINÉ A ETRE MONTÉ SUR UN VÉLO

(43) Veröffentlichungstag der Anmeldung: 31.05.2017
(73) Patentinhaber: Deutsche Telekom AG, 53113 Bonn (DE)
(72) Erfinder: Winkler, Jörg, 72587 Römerstein (DE); Rau, Markus, 89233 Neu-Ulm (DE)
(74) Vertreter: Patentship Patentanwaltsgesellschaft mbH

(56) Entgegenhaltungen:
- EP-A1- 1 923 302
- DE-A1- 10 109 341
- KR-A- 20120 094 356
- US-A1- 2008 109 121
- WALKER W ET AL: "Mobile health monitoring systems", PROCEEDINGS OF THE 31ST ANNUAL INTERNATIONAL CONFERENCE OF THE IEEE ENGINEERING IN MEDICINE AND BIOLOGY SOCIETY: ENGINEERING THE FUTURE OF BIOMEDICINE, EMBC 2009, IEEE, 3. September 2009 (2009-09-03), Seiten 5199-5202, XP031882425, DOI: 10.1109/IEMBS.2009.5334583 ISBN: 978-1-4244-3296-7
- N.M.A.LATIFF, M.M.MOHMAD, S.K.S.YUSOF, M.R.A.RAHIM, H.SAYUTI, N.N.A.MALIK: "Training Monitoring System for Cyclist Based on Android Application Development", JURNAL TEKNOLOGI, Bd. 64, Nr. 3, 30. September 2013 (2013-09-30), Seiten 49-53, XP055272248, Malaysia ISSN: 0127-9696, DOI: http://dx.doi.org/10.11113/jt.v64.2078

## Beschreibung

Die vorliegende Erfindung betrifft ein Sensorsystem zur Montage an einem Fahrrad, insbesondere ein Sensorsystem mit einer an das Fahrrad montierbaren Kommunikationseinheit, die am Fahrrad erfasste Informationen über ein Mobilfunknetz an einen Server überträgt. Insbesondere handelt es sich bei den Sensoren des Sensorsystems um Geschwindigkeits- (Speed) und Trittfrequenz- (Cadence) Sensoren.

Bei modernen High-Tech Fahrrädern gibt es bereits eine Menge an Sensoren, die verschiedenste Informationen über das Fahrrad erfassen, wie beispielsweise Geschwindigkeit, Anzahl gefahrener Kilometer, benötigte Zeit, Höhenlage, Außentemperatur, etc. Informationen über den Fahrer des Fahrrads, beispielsweise Körpertemperatur, Blutdruck oder Puls können mit mobilen medizinischen Geräten erfasst werden, die entweder direkt am Körper des Fahrers oder an einer speziellen Halterung am Fahrrad angebracht werden können. Ferner existieren Halterungen am Fahrrad zur Mitnahme eines Smartphones, so dass der Fahrer während der Fahrt eine Kommunikationsverbindung aufbauen kann, um beispielsweise auf Probleme hinzuweisen, einen Abschleppdienst zu holen oder einen Notarzt zu rufen.

Für den Fahrer stehen aber diese Dienste nur zur Verfügung wenn er sein Smartphone am Rad hat. Ferner sind Dienste wie z.B. der Diebstahlschutz damit gar nicht möglich. Der Fahrer nimmt ja sein Smartphone mit, wenn er das Fahrrad abstellt. D.h. nur mit Hilfe eines konnektierten Sensors kann der Diebstahl auch gemeldet werden. Ferner soll bei einem Unfall die Unfallmeldung automatisch abgesetzt werden. Bei einem schweren Unfall ist der Fahrer sehr wahrscheinlich selbst gar nicht mehr in der Lage eigenständig Hilfe zu rufen. Auch kann das Smartphone bei einem Unfall viel leichter zerstört werden als ein konnektierter Sensor. Mit dem Smartphone verbundene Sensoren zeigen nur Informationen über das eigene Fahrverhalten, nicht jedoch im Vergleich zu anderen Teilnehmern an, beispielsweise einem Fahrradrennen. Hier ist der Fahrer darauf angewiesen, zusätzliche Informationen über das Fahrverhalten der anderen Teilnehmer zu erhalten, beispielsweise durch eigenes Beobachten oder Zurufe des Trainers und diese Informationen mit den von den am eigenen Fahrrad gelieferten Informationen abzugleichen. Mit Hilfe eines konnektierten Sensors können aber mehrere Fahrräder via Backend vernetzt werden, auch können automatische Auswertungen vorgenommen werden, die dem Fahrer während der Fahrt zur Verfügung gestellt werden können.

Die DE 101 09 341 A1 offenbart ein Mobilfunkgerät, das an einem Fahrrad mit Halterungsmitteln befestigt werden kann und mit einer Datenschnittstelle zum Austauschen von Daten mit einer dem Fahrrad zugeordneten Erfassungseinheit versehen ist.

Die EP 1 923 302 A1 offenbart einen Kadenz- und einen Geschwindigkeitssensor, die an einer Kettenstrebe des Fahrrades befestigbar sind.

Es wäre damit wünschenswert, das Fahrrad weiter zu vernetzen, um so neue Anwendungsfälle (englisch "use cases") abzudecken, die sowohl dem Fahrer als auch dem Fahrradhersteller einen Mehrwert bringen. Beispielsweise neue Anwendungsfälle im Bereich des Coaching zum Erfassen von individuellen Leistungsdaten, im Bereich der elektronischen Dienste, wie Pannenservice oder medizinischer Service, im Bereich der Analyse der individuellen Leistungsdaten des Fahrers oder im Bereich des Service bezüglich Reparaturassistenz sowie insbesondere im Bereich des Diebstahlschutzes und der Diebstahlerkennung.

Es ist die Aufgabe der vorliegenden Erfindung, Use Cases, die bisher gar nicht bzw. nur in Verbindung mit einem Smartphone zu realisieren waren, abzubilden. Ferner ist es Aufgabe, ein Konzept zu schaffen, mit welchem das Fahrrad besser vernetzt wird, so dass dem Fahrradfahrer und dem Fahrradhersteller Daten zur Verfügung gestellt werden, mit denen die oben beschriebenen Anwendungsfälle realisiert werden können.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Verfahren und Systeme können Server nutzen. Der Server kann in einem Mobilfunknetz oder in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet. Definierte technische Schnittstellen und Protokolle können Angebot und Nutzung dieser Dienstleistungen definieren.

Die im Folgenden vorgestellten Verfahren und Systeme können Magnetsensoren wie beispielsweise Reed-Sensoren oder Hall-Sensoren nutzen. Reed Sensoren sind magnetisch betätigte Näherungsschalter in unterschiedlichen Bauformen. Die Schaltfunktion wird ausgelöst durch das Annähern beziehungsweise Entfernen eines Magneten. Reed-Sensoren gibt es in den unterschiedlichsten Größen und Formen. Es können sehr kleine Reed Schalter produziert werden, die in Näherungssensoren integriert werden können. Das Ergebnis ist ein winziger Sensor mit sehr großen Leistungsmerkmalen. Ein Reedschalter besteht aus zwei ferromagnetischen Schaltzungen, beispielsweise einer Nickel/Eisenlegierung, die hermetisch dicht verschlossen in ein Glasröhrchen eingeschmolzen sind. Bei Wechslern oder Öffnern ist das Ende einer der Schaltzungen unmagnetisch. Die Schaltzungen überlappen sich und haben einen geringen Abstand von einigen Mikrometern bis ca. 1mm zueinander. Wirkt ein axiales Magnetfeld auf den Schalter, bewegen sich die beiden Paddel aufeinander zu - der Schalter schließt. Ist das durch Permanentmagnete oder Spulen erzeugte Magnetfeld stärker als die Federwirkung der Paddel, schließen die beiden Kontakte. Das zum Öffnen zu unterschreitende Feld ist wesentlich kleiner.

Hall-Sensoren beruhen auf dem Hall-Effekt. Wird ein Hall-Sensor von einem Strom durchflossen und in ein senkrecht dazu verlaufendes Magnetfeld gebracht, so erzeugt der Hall-Sensor eine Ausgangsspannung, die proportional zum Produkt aus magnetischer Feldstärke und Strom ist (Hall-Effekt). Ein Hall-Sensor liefert auch dann ein Signal, wenn er in ein konstantes Magnetfeld gebracht wird. Zur Realisierung von Hall-Sensoren werden keine magnetisch aktiven Materialien (wie z.B. Nickel oder Eisen) benötigt, so dass es zu keinem negativen Einfluss auf das zu messende Magnetfeld kommt. Diskrete Hall-Sensoren werden aus dünnen Halbleiterplättchen hergestellt, in denen die Ladungsträger-Dichte klein und damit die Elektronen-Geschwindigkeit groß ist. Integrierte Hall-Sensoren werden in Schaltkreise integriert, in denen zusätzliche Funktionen wie z.B. Signalverstärkung, Analog-Digital-Wandlung, Digitale Signalverarbeitung etc. realisiert werden können.

Das im Folgenden vorgestellte Sensorsystem ist dafür geeignet, Informationen über ein Mobilfunk-Kommunikationsnetz zu übertragen. Der Begriff Mobilfunk-Kommunikationsnetz oder abgekürzt Mobilfunknetz bezeichnet dabei die technische Infrastruktur, auf der die Übertragung von Signalen für den Mobilfunk stattfindet. Das Mobilfunknetz umfasst im Wesentlichen das Mobilvermittlungsnetz, in dem die Übertragung und Vermittlung der Signale zwischen den ortsfesten Einrichtungen und Plattformen des Mobilfunknetzes stattfinden, sowie das Zugangsnetz, in dem die Übertragung der Signale zwischen einer Mobilfunkantenne und dem Mobiltelefon bzw. Smartphone oder einer mobilen Einrichtung mit Mobilfunkadapter stattfindet. Das Zugangsnetz wird auch als Luftschnittstelle bezeichnet. In Abgrenzung zu den Nahbereichs-Funknetzen, die eine Kommunikation über kurze Distanzen (im Nahbereich) realisieren, wie beispielsweise Bluetooth (IEEE 802.15), WLAN (IEEE 802.11), WiMAX (IEEE 802.16), soll mit den hier bezeichneten Mobilfunknetzen eine Kommunikation über weite Distanzen möglich sein, d.h. über das Mobilfunkzugangsnetz in das Mobilfunkvermittlungsnetz, von wo aus die Kommunikationsverbindung in weitere Netze vermittelt werden kann.

Das im Folgenden vorgestellte Sensorsystem kann neben einer Schnittstelle für die Kommunikation mit dem Mobilfunknetz weitere drahtlose oder drahtgebundene Kommunikationsschnittstellen umfassen. Eine drahtlose Bluetooth-Schnittstelle oder Bluetooth Low Energy (BLE) Schnittstelle kann die Kommunikation mit den am Fahrrad montierten Sensoren ermöglichen oder eine Kommunikation mit dem vom Fahrradfahrer mitgeführten Smartphone aufsetzen. Dabei bezeichnet Bluetooth Low Energy, Bluetooth LE, Bluetooth Smart, (abgekürzt BLE) eine Funktechnik, mit der sich Geräte in einer Umgebung von etwa 10 Metern vernetzen lassen. BLE ist eine Erweiterung des Industriestandards Bluetooth, die bei einem ähnlichen Kommunikationsbereich einen deutlich geringeren Stromverbrauch und damit geringere Kosten aufweist.

Ferner kann eine Satelliten-Navigationsschnittstelle kann den Kontakt zu einem Satelliten herstellen und darüber die momentane Position des Sensorsystems und damit des Fahrrads bestimmen. Die Satelliten-Navigationsschnittstelle kann ein GNSS-Modul umfassen, d.h. ein Modul mit dem über GNSS (Globales Navigations-Satelliten System) eine Positionsbestimmung und Navigation auf der Erde und in der Luft durch den Empfang der Signale von Navigationssatelliten ermöglicht wird. GNSS ist dabei ein Sammelbegriff für die Verwendung bestehender und künftiger globaler Satellitensysteme wie beispielsweise GPS (Global Positioning System), GLONASS (GLObal NAvigation Satellite System), Galileo, Beidou etc.

Gemäß einem ersten Aspekt betrifft die Erfindung ein Sensorsystem zur Montage an einem Fahrrad, mit: zumindest einem an ein rotierbares Teil des Fahrrads montierbaren Magneten; einem an ein nicht rotierbares Teil des Fahrrads montierbaren Sensor, der ausgelegt ist, bei einer Drehbewegung des rotierbaren Teils Informationen über eine Annäherung an den Magneten zu erfassen; und einer an das Fahrrad montierbaren Kommunikationseinheit, welche ausgebildet ist, die von dem Sensor erfassten Informationen gemäß einem vorgegebenen Profil zu verarbeiten und die verarbeiteten Informationen über ein Mobilfunk-Kommunikationsnetz an einen Server zu übertragen.

Dies hat den Vorteil, dass mit einem solchen Sensorsystem dem Fahrradfahrer beim Fahrradfahren die Aufnahme und Verarbeitung von Informationen erleichtert wird, so dass er sich auf das Fahrradfahren konzentrieren kann. Aufgrund der Weiterleitung an den Server über ein Mobilfunk-Kommunikationsnetz kann eine komplexe Aufbereitung der erfassten Informationen in dem Server realisiert werden, so dass dem Fahrer das vernetzte Fahren ermöglicht wird, bei dem ihm jeweils die für ihn entsprechend seiner Fahrsituation erforderliche Information zielgerichtet zur Verfügung gestellt wird.

Ferner bringt dies den Vorteil, dass durch die Übermittlung der Fahrdaten an den Server, beispielsweise eine Backend-Cloud, diese Fahrdaten von dem Fahrradhersteller genutzt werden können, um das Fahrrad bzw. Produkte, die das Fahrrad betreffen, weiter zu verbessern oder um dem Fahrer weitere Dienste zur Verfügung zu stellen, so dass sowohl für den Fahrradfahrer als auch für den Fahrradhersteller ein Mehrwert erzeugt wird.

Gemäß einer Ausführungsform des Sensorsystems ist der Sensor ein Magnetsensor, insbesondere ein Reed-Sensor oder ein Hall-Sensor.

Dies hat den Vorteil, dass solche Sensoren sehr kompakt hergestellt werden können, so dass sie sich dazu eignen am Fahrradrahmen montiert zu werden ohne das Gewicht des Fahrrads in signifikanter Weise zu erhöhen. Außerdem ermöglichen Magnetsensoren, wie Reed-Sensoren oder Hall-Sensoren eine zuverlässige Detektion einer Magnetannäherung und damit einer Umdrehung des rotierbaren Teils am Fahrrad.

Erfindungsgemäß umfasst die Kommunikationseinheit ferner folgendes: eine Sensorschnittstelle, die ausgelegt ist, die von dem Sensor erfassten Informationen drahtgebunden oder drahtlos, insbesondere über Bluetooth, an die Kommunikationseinheit zu übertragen; einen Mikrocontroller, der ausgelegt ist, die von der Sensorschnittstelle empfangenen Informationen zu verarbeiten; und eine Mobilfunkschnittstelle, die ausgelegt ist, die von dem Mikrocontroller verarbeiteten Informationen über das Mobilfunk-Kommunikationsnetz zu übertragen.

Dies hat den Vorteil, dass eine Kommunikationseinheit mit solchen elektronischen Komponenten kompakt aufgebaut werden kann und damit unsichtbar im Rahmen des Fahrrads montiert werden kann, was gleichzeitig einen zuverlässigen Diebstahlschutz gewährleistet. Ferner ist eine kompakte Aufbauweise der Kommunikationseinheit und damit ein geringes Gewicht von Vorteil, wenn der Fahrer Rennen fährt und jedes unnötige Gramm Gewicht ihm einen Nachteil bringt.

Gemäß einer Ausführungsform des Sensorsystems umfasst die Kommunikationseinheit einen Akku, insbesondere einen mit einem Induktionsladeverfahren oder mit einem Dynamo ladbaren Akku, der ausgelegt ist, die Kommunikationseinheit mit Energie zu versorgen.

Dies hat den Vorteil, dass die Kommunikationseinheit über den integrierten Akku mit Energie versorgt werden kann, ohne dass eine externe Energieversorgungseinheit nötig ist. Ein solcher ladbarer Akku versorgt die Kommunikationseinheit über längere Zeit mit Energie, beispielsweise kann hierzu ein Dynamo des Fahrrads genutzt werden oder der Akku kann mittels Induktionsladeverfahren geladen werden. Das Induktionsladeverfahren liefert beispielsweise einen gerichteten, aufbereiteten Gleichstrom, mit dem der Akku geladen werden kann. Das Sensorsystem ist damit besonders langlebig und sorgt für eine kontinuierliche Diebstahlüberwachung mit Hilfe von Bewegungssensoren, die auch dann eingeschaltet bleiben können, wenn der Fahrer sein Fahrrad abstellt, so dass das Fahrrad beispielsweise im Falle eines Diebstahls leichter wiederaufgefunden werden kann.

In einer weiteren vorteilhaften Ausführungsform kann beim Abstellen des Fahrrads das gesamte Sensorsystem bis auf einen Beschleunigungs- und Lagesensor abgeschaltet bzw. in einen Ruhezustand versetzt werden, so dass Energie eingespart wird. Bei unerlaubter Bewegung des Fahrrads, z.B. bei einem Diebstahl kann der Beschleunigungs- und Lagesensor eine Bewegung des Fahrrads feststellen, dann zumindest den Teil des Sensorsystems aufwecken, der das Ortungssignal abstrahlt, um so über die aktuelle Position des Fahrrads zu informieren und ein Wiederauffinden des Fahrrads zu ermöglichen.

Gemäß einer Ausführungsform des Sensorsystems ist das rotierbare Teil ein Teil eines Rades des Fahrrads, insbesondere eine Speiche oder eine Felge; und das nicht rotierbare Teil umfasst ein Rahmensegment des Fahrrads, an dem das rotierbare Teil befestigt ist.

Dies hat den Vorteil, dass damit eine zuverlässige Geschwindigkeitsmessung realisiert werden kann. Der Magnet wird dabei am Rad so angeordnet, dass er bei jeder Umdrehung des Rades in Wechselwirkung mit dem am Rahmensegment angebrachten Sensor kommt, so dass der Sensor eine Umdrehung des Rades detektiert.

Gemäß einer Ausführungsform des Sensorsystems ist der Mikrocontroller ausgelegt, basierend auf den von der Sensorschnittstelle empfangenen Informationen eine Geschwindigkeit des Fahrrads zu bestimmen.

Dies hat den Vorteil, dass eine einfache Geschwindigkeitsmessung anhand der Daten des Magnetsensors möglich ist.

Erfindungsgemäß umfasst das Sensorsystem ferner einen an ein zweites rotierbares Teil des Fahrrads montierbaren zweiten Magneten; und einen an dem nicht rotierbaren Teil des Fahrrads montierbaren zweiten Sensor, der ausgelegt ist, bei einer Drehbewegung des zweiten rotierbaren Teils Informationen über eine Annäherung des zweiten Magneten zu erfassen, wobei die Sensorschnittstelle ausgelegt ist, die von dem zweiten Sensor erfassten Informationen an den Microcontroller zu übertragen.

Dies hat den Vorteil, dass gleichzeitig zwei verschiedene Sensorinformationen am Fahrrad erfasst werden können, beispielsweise eine Geschwindigkeit und eine Trittfrequenz (Speed&Cadence) oder eine Messung der Umdrehungszahl an verschiedenen Rädern. Alternativ kann der zweite Sensor als Redundanz für den ersten Sensor dienen.

Gemäß einer Ausführungsform des Sensorsystems ist das zweite rotierbare Teil ein Pedalkurbelarm des Fahrrads; und das nicht rotierbare Teil umfasst ein Rahmensegment des Fahrrads, an dem der Pedalkurbelarm befestigt ist.

Dies hat den Vorteil, dass damit eine zuverlässige Trittfrequenz- bzw. Cadence-Messung realisiert werden kann. Der Magnet wird dabei am Pedalkurbelarm so angeordnet, dass er bei jeder Umdrehung des Pedalkurbelarms in Wechselwirkung mit dem am Rahmensegment angebrachten Sensor kommt, so dass der Sensor eine Umdrehung des Pedalkurbelarmes, d.h. eine Trittumdrehung des Pedals des Fahrrads detektiert. Über die Trittfrequenz in Kombination mit der Geschwindigkeit kann das Übersetzungsverhältnis und damit die Laufleistung der Fahrradkette bestimmt werden, so dass eine Überwachung der Lebensdauer der Kette möglich wird bzw. Serviceintervalle für eine erforderliche Wartung der Kette, z.B. Wechseln oder Schmieren detektiert werden können.

Gemäß einer Ausführungsform des Sensorsystems ist der Mikrocontroller ausgelegt, basierend auf den von der Sensorschnittstelle empfangenen Informationen eine Trittfrequenz des Fahrrads zu bestimmen.

Dies hat den Vorteil, dass eine einfache Trittfrequenzmessung anhand der Daten des zweiten Magnetsensors möglich ist.

Erfindungsgemäß sind der Sensor und der zweite Sensor in einem gemeinsamen Gehäuse untergebracht, das an einer Kettenstrebe eines Rahmens des Fahrrads montierbar ist.

Dies hat den Vorteil, dass für das Montieren der beiden Sensoren nur ein Arbeitsschritt erforderlich ist, da nur das Gehäuse montiert werden muss, in dem sich beide Sensoren befinden. Dies vereinfacht die Montage des Sensorsystems am Fahrrad. Bei Montage an der Kettenstrebe des Fahrrads kann damit gleichzeitig die Umdrehungszahl des Hinterrads als auch die Umdrehungszahl der Tretkurbel bestimmt werden.

Gemäß einer Ausführungsform umfasst das Sensorsystem ferner zumindest eine an das Fahrrad montierbare Antenne, die mit der Mobilfunkschnittstelle koppelbar ist und ausgelegt ist, die an den Server zu übertragenden Informationen als Funksignal an das Mobilfunk-Kommunikationsnetz abzustrahlen. Alternativ können die Antenne auch direkt im Sensorsystem integriert werden. Dies bedeutet, dass keine externen Antennen verbaut werden müssten.

Dies hat den Vorteil, dass die Kommunikationseinheit über weite Reichweiten mit einer Basisstation des Mobilfunknetzes kommunizieren kann. Die Antenne kann beispielsweise so in das Fahrrad integriert sein, dass das Sensorsystem des Fahrrads von außen nicht erkannt werden kann und damit einen effizienten Diebstahlsschutz bietet.

Gemäß einer Ausführungsform des Sensorsystems ist die Mobilfunkschnittstelle ferner ausgelegt, die von dem Mikrocontroller empfangenen verarbeiteten Informationen über das Mobilfunk-Kommunikationsnetz in Verbindung mit einem Backend Serversystem an eine Smartphone-App, insbesondere eine Smartphone-App eines Nutzers des Fahrrads zu übertragen. Zusätzlich oder alternativ kann auch eine Bluetooth-Schnittstelle verwendet werden, um die von dem Mikrocontroller empfangenen verarbeiteten Informationen direkt (d.h. ohne Umweg über das Mobilfunk-Kommunikationsnetz) an die Smartphone-App zu übertragen.

Dies hat den Vorteil, dass die App dem Fahrradfahrer neben verschiedenen Fahrdaten auch die zurückgelegte Strecke anzeigen kann, beispielsweise auf einer Karte. Ist das Fahrrad abhandengekommen, so kann der Eigentümer sein Fahrrad per App wieder ausfindig machen.

Anhand der erfassten Sensordaten kann ein Sturz des Fahrradfahrers durch die Kommunikationseinheit erkannt werden. Dazu kann ein Beschleunigungs- und Lagesensor erkennen, ob eine Geschwindigkeit des Fahrrads oberhalb eines vorgegebenen Wertes, z:B. etwa 5 km/h vorliegt und ob gleichzeitig eine Neigung des Fahrrads größer als ein vorgegebener Neigungswinkel, beispielsweise etwa 45 Grad, vorliegt. Wenn der Fahrer das Fahrrad nicht innerhalb einer vorgegebenen Zeit, z.B. innerhalb von 1 bis 5 Minuten, insbesondere innerhalb von etwa 3 Minuten wieder in eine aufrechte Lage bringt, so dass der Beschleunigungs- und Lagesensor wieder Messdaten kleiner des vorgegebenen Winkels liefert, kann eine Unfallsituation angenommen und angezeigt werden. Dann können Personen informiert werden, deren Kontaktdaten in einer vorgegebenen Datei im Backend Serversystem abgelegt sind.

Gemäß einer Ausführungsform des Sensorsystems umfasst die Kommunikationseinheit ferner folgendes: eine SIM-Karte und ein Modem (z.B. 2G/2G LTE zukünftig 5G), das ausgelegt ist, eine Kommunikationsverbindung über das Mobilfunk-Kommunikationsnetz in Verbindung mit der SIM-Karte herzustellen; und zumindest eine der folgenden weiteren Schnittstellen: eine Bluetooth-Schnittstelle, insbesondere eine Bluetooth Low Energy (BLE) Schnittstelle, eine Satelliten-Navigations Schnittstelle, insbesondere eine GPS-Schnittstelle oder eine GNSS-Schnittstelle.

Die SIM-Karte bietet den Vorteil, dass die Kommunikationseinheit eine vollständige Mobilfunkkonnektivität bietet und damit dem Fahrer ein vernetztes Fahren ermöglicht. Die Sensoren können entweder leitungsgebunden mit der Kommunikationseinheit verbunden werden, beispielsweise wenn die Sensoren in der Kommunikationseinheit integriert sind, oder drahtlos, beispielsweise wenn die Sensoren nicht in der Kommunikationseinheit untergebracht sind und an einer anderen Stelle am Fahrrad angebracht sind als die Kommunikationseinheit. Die BLE Schnittstelle sorgt für eine lange Lebensdauer der Batterie bzw. des Akkus der Kommunikationseinheit. Die Satelliten-Navigationsschnittstelle sorgt für eine Ortbarkeit der Kommunikationseinheit und damit des Fahrrads.

Gemäß einem zweiten Aspekt betrifft die Erfindung ein Fahrrad mit einem Sensorsystem gemäß dem oben beschriebenen ersten Aspekt oder einer der oben beschriebenen Ausführungsformen des Sensorsystems.

Dies hat den Vorteil, dass ein Fahrrad mit einem solchen Sensorsystem dem Fahrradfahrer beim Fahrradfahren die Aufnahme und Verarbeitung von Informationen erleichtert, so dass er sich auf das Fahrradfahren konzentrieren kann. Aufgrund der Weiterleitung an den Server über ein Mobilfunk-Kommunikationsnetz kann eine komplexe Aufbereitung der erfassten Informationen in dem Server realisiert werden, so dass dem Fahrer das vernetzte Fahren ermöglicht wird, bei dem ihm jeweils die für ihn entsprechend seiner Fahrsituation erforderliche Information zielgerichtet zur Verfügung gestellt wird. Das Sensorsystem kann bei jedem Typ von Fahrrad genutzt werden. Alle Informationen über das Fahrrad, d.h. Abmessungen, Typ des Fahrrads, etc. können in dem Profil gespeichert sein, mit dem die Kommunikationseinheit die von dem Sensor erfassten Informationen verarbeitet.

Gemäß einem dritten Aspekt betrifft die Erfindung ein Verfahren zum Erfassen von Informationen über ein Fahrrad, mit den folgenden Schritten: Erfassen einer Annäherung eines an einem rotierbaren Teil des Fahrrads befestigten Magneten an einen an einem nicht-rotierbaren Teil des Fahrrads befestigten Sensor; Verarbeiten der erfassten Informationen gemäß einem vorgegebenen Profil; und Übertragen der verarbeiteten Informationen über ein Mobilfunk-Kommunikationsnetz an einen Server.

Dies hat den Vorteil, dass mit einem solchen Verfahren dem Fahrradfahrer beim Fahrradfahren die Aufnahme und Verarbeitung von Informationen erleichtert wird, so dass er sich auf das Fahrradfahren konzentrieren kann. Aufgrund des Übertragens der verarbeiteten Informationen an den Server über ein Mobilfunk-Kommunikationsnetz kann eine komplexe Aufbereitung der erfassten Informationen in dem Server realisiert werden, so dass dem Fahrer das vernetzte Fahren ermöglicht wird, bei dem ihm jeweils die für ihn entsprechend seiner Fahrsituation erforderliche Information zielgerichtet zur Verfügung gestellt wird.

Weitere Ausführungsbeispiele werden Bezug nehmend auf die beiliegenden Zeichnungen erläutert. Es zeigen:
Fig. 1 eine schematische Darstellung eines Sensorsystems 100 zur Montage an einem Fahrrad 102 gemäß einer nicht erfindungsgemäßen ersten Variante;
Fig. 2 eine schematische Darstellung eines Sensorsystems 200 zur Montage an einem Fahrrad 102 gemäß einer nicht erfindungsgemäßen zweiten Variante;
Fig. 3 eine schematische Darstellung eines Sensorsystems 300 zur Montage an einem Fahrrad 102 gemäß einer nicht erfindungsgemäßen dritten Variante;
Fig. 4 eine schematische Darstellung eines Sensorsystems 400 zur Montage an einem Fahrrad 102 gemäß einer nicht erfindungsgemäßen vierten Variante;
Fig. 5 eine schematische Darstellung eines Sensorsystems 500 zur Montage an einem Fahrrad 102 gemäß einer beispielhaften Ausführungsform;
Fig. 6 eine schematische Darstellung von Anwendungsfällen 600 für ein Sensorsystem zur Montage an einem Fahrrad gemäß einer beispielhaften Ausführungsform;
Fig. 7 eine schematische Darstellung eines Verfahrens 700 zum Erfassen von Informationen über ein Fahrrad gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen, das durch die Ansprüche definiert ist. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale.

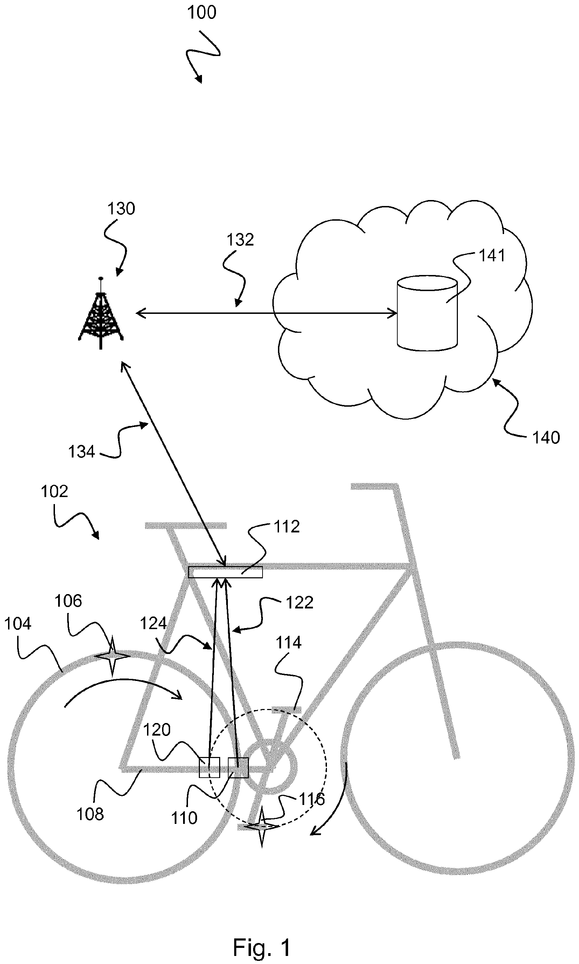

Fig. 1 zeigt eine schematische Darstellung eines Sensorsystems 100 zur Montage an einem Fahrrad 102 gemäß einer nicht erfindungsgemäßen ersten Variante.

Das Sensorsystem 100 umfasst einen an ein rotierbares Teil 104 des Fahrrads 102 montierbaren Magneten 106; einem an ein nicht rotierbares Teil 108 des Fahrrads 102 montierbaren Sensor 110, der ausgebildet ist, bei einer Drehbewegung des rotierbaren Teils 104 Informationen über eine Annäherung an den Magneten 106 zu erfassen; und eine an das Fahrrad 102 montierbare Kommunikationseinheit 112. Die Kommunikationseinheit 112 verarbeitet die von dem Sensor 110 erfassten Informationen gemäß einem vorgegebenen Profil und überträgt die verarbeiteten Informationen über ein Mobilfunk-Kommunikationsnetz 130 an einen Server 141.

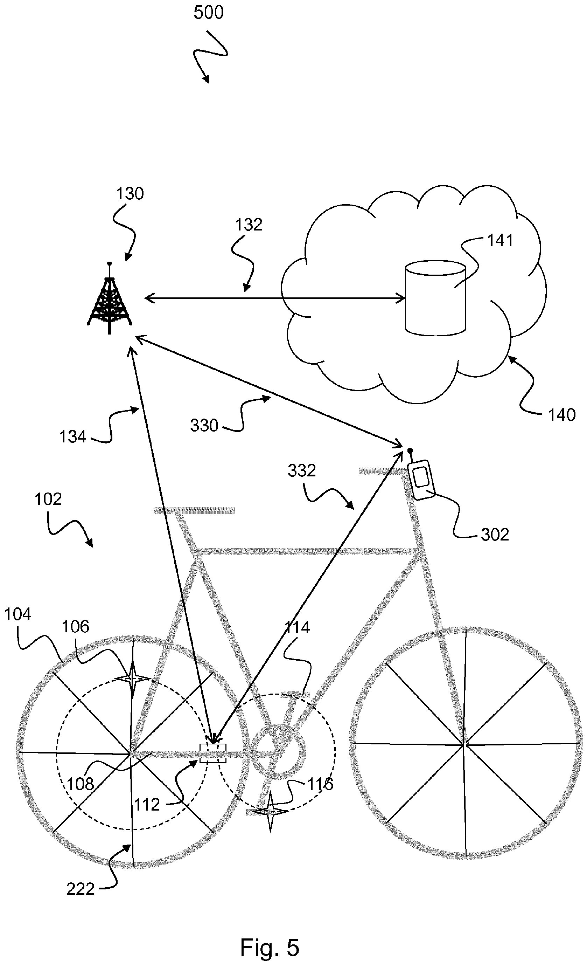

In der Figur 1 sind Kommunikationseinheit 112 und Sensor 110 als getrennte Einheiten dargestellt. In einer Ausführungsform der Erfindung, die weiter unten zu Figur 5 beschrieben ist, sind die Kommunikationseinheit 112 und der Sensor 110 eine Einheit.

Die Kommunikationseinheit 112 kann beispielsweise an oder in einem Rahmensegment des Fahrrades montiert werden, beispielsweise in der Nähe des Sattels. In der Figur 1 kann die Kommunikationseinheit 112 beispielsweise nahe des Sattels montiert werden. Gemäß der Erfindung, die weiter unten zu Figur 5 beschrieben ist, kann die Kommunikationseinheit 112 (dort eine Einheit, in der die Sensoren untergebracht sind) an der Stelle des Fahrrads montiert werden, an der die Sensoren montiert sind, um in Wechselwirkung mit den Magneten zu stehen, d.h. beispielsweise an einer Kettenstrebe des Fahrrads, wie in Figur 5 gezeigt.

Aufgrund der Übertragung der verarbeiteten Informationen des Fahrrads über das Mobilfunk-Kommunikationsnetz 130 an den Server 141 ist es jederzeit möglich, Daten des Fahrrads, wie beispielsweise Geschwindigkeit und Trittfrequenz auszuwerten, zu dokumentieren und bei Anomalien einzuschreiten, beispielsweise gemäß den unten zu Figur 5 beschriebenen Szenarien.

Der Sensor 110 kann beispielsweise ein Magnetsensor, z.B. ein Reed-Sensor oder ein Hall-Sensor sein. Der Reed-Sensor kann beispielsweise aus zwei ferromagnetischen Schaltzungen bestehen. Wirkt ein axiales Magnetfeld auf den Reed-Sensor ein, das beispielsweise durch den Magneten 106 am sich drehenden Rad erzeugt wird, so bewegen sich die beiden Schaltzungen aufeinander zu und der Schalter schließt, so dass der Reed-Sensor die Annäherung des Magneten 106 erfassen kann. Ist das durch Permanentmagnete oder Spulen erzeugte Magnetfeld stärker als die Federwirkung der Paddel, schließen die beiden Kontakte. Das zum Öffnen zu unterschreitende Feld ist wesentlich kleiner. Der Hall-Sensor kann ein diskreter Hall-Sensor oder ein integrierter Hall-Sensor sein. Der integrierte Hall-Sensor kann beispielsweise in einen Schaltkreis integriert sein, welcher zusätzliche Funktionen wie z.B. Signalverstärkung, Analog-Digital-Wandlung, Digitale Signalverarbeitung etc. realisiert.

Die Kommunikationseinheit 112 kann eine Sensorschnittstelle 122 aufweisen, um die von dem Sensor 110 erfassten Informationen an die Kommunikationseinheit 112 zu übertragen. Die Datenübertragung kann drahtgebunden oder drahtlos erfolgen. Bei drahtgebundener Ausführung sind Drähte zwischen dem Sensor 110 und der Sensorschnittstelle 122 am Fahrradrahmen angebracht. Bei drahtloser Übertragung ist zwischen Sensor 110 und Sensorschnittstelle 122 ein Drahtlos-Kommunikationsprotokoll implementiert, beispielsweise ein Nahbereichskommunikationsprotokoll wie Bluetooth oder ein anderes.

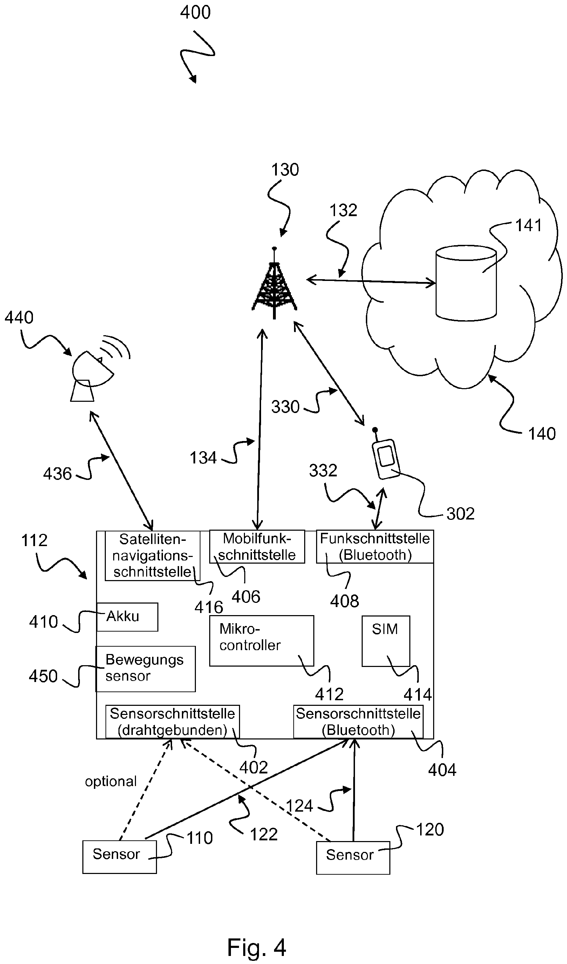

Die Kommunikationseinheit 112 kann einen Mikrocontroller, beispielsweise einen Mikrocontroller 412 wie unten zu Figur 4 beschrieben, aufweisen. In dem Mikrocontroller 412 können die von der Sensorschnittstelle 122 empfangenen Informationen gemäß dem vorgegebenen Profil verarbeitet werden. Das vorgegebene Profil kann beispielsweise Daten über die Masse des Fahrrads umfassen, so dass über die Anzahl von Annäherungen des Magneten 106 an den Sensor 110 und beispielsweise den Durchmesser des Rades bestimmt werden kann, mit welcher Geschwindigkeit das Fahrrad gerade fährt.

Die Kommunikationseinheit 112 kann ferner eine Mobilfunkschnittstelle 134 umfassen, mit der die von dem Mikrocontroller 412 verarbeiteten Informationen über das Mobilfunk-Kommunikationsnetz 130 an den Server 141 übertragen werden können.

Die Kommunikationseinheit 112 kann einen Akku, beispielsweise einen Akku 410 wie unten zu Figur 4 näher beschrieben, aufweisen. Der Akku kann beispielsweise über ein Induktionsladeverfahren oder über einen Dynamo geladen werden, z.B. über einen am Fahrrad montierten Dynamo. Über den Akku kann die Kommunikationseinheit 112 mit Energie versorgt werden.

Beispielsweise kann das rotierbare Teil 104 ein Teil eines Rades des Fahrrads 102 sein. Der Magnet 106 kann an einer Felge des Rades angebracht sein oder auch an einer Speiche. Das nicht rotierbare Teil 108 kann ein Rahmensegment des Fahrrads 102 umfassen, an dem das Rad befestigt ist. Beispielsweise kann der Sensor 110 an einer Strebe des Rahmens angebracht sein, an welcher der am rotierbaren Teil angebrachte Magnet 106 bei jeder Umdrehung nahe genug vorbeikommt, um von dem Sensor 110 erfasst zu werden.

Der Mikrocontroller 412 kann basierend auf den von der Sensorschnittstelle 122 empfangenen Informationen eine Geschwindigkeit des Fahrrads 102 bestimmen, indem er die empfangenen Informationen mit dem vorgegebenen Profil in Relation bringt, beispielsweise den vorgegebenen Abmessungen des Fahrrads, wie zum Beispiel dem Radumfang des Fahrrads. Das vorgegebene Profil kann in einer Datei im Server 141 hinterlegt sein.

Zusätzlich oder alternativ kann das Sensorsystem 100 einen an ein zweites rotierbares Teil 114 des Fahrrads 102 montierbaren zweiten Magneten 116 umfassen sowie einen an dem nicht rotierbaren Teil 108 des Fahrrads 102 montierbaren zweiten Sensor 120. Mit dem zweiten Sensor 120 können bei einer Drehbewegung des zweiten rotierbaren Teils 114 Informationen über eine Annäherung des zweiten Magneten 116 erfasst werden. Die Sensorschnittstelle kann zusätzlich oder alternativ zu den vom ersten Sensor 110 erfassten Informationen auch die von dem zweiten Sensor 120 erfassten Informationen an den Microcontroller 412 übertragen, welcher diese Informationen über die Mobilfunkschnittstelle an das Mobilfunk-Kommunikationsnetz 130 übertragen kann.

Das zweite rotierbare Teil 114 kann ein Pedalkurbelarm des Fahrrads 102 sein und das nicht rotierbare Teil 108 kann ein Rahmensegment des Fahrrads 102 umfassen, an dem der Pedalkurbelarm befestigt ist. Es kann sich hier um das gleiche Rahmensegment des Fahrrads handeln. Möglich ist jedoch auch, dass beide Sensoren an verschiedenen Rahmensegmenten des Fahrrads angebracht sind. In einer weiteren Ausführungsform, die unten zu Figur 5 näher beschrieben ist, sind beide Sensoren in der Kommunikationseinheit 112 untergebracht bzw. in diese integriert. Dann kann die Kommunikationseinheit 112 mit den Sensoren beispielsweise am Rahmensegment des Fahrrads 102 angebracht sein, das mit den beiden Magneten in Wechselwirkung steht, wie näher in Figur 5 aufgezeigt ist.

Der Mikrocontroller kann basierend auf den von der Sensorschnittstelle 122, 124 empfangenen Informationen eine Trittfrequenz ("Cadence") des Fahrrads 102 bestimmen. Das Fahrrad kann ferner über eine oder mehrere Antennen verfügen, die beispielsweise am oder im Rahmen montiert sind. Mit den Antennen bzw. der Antenne können die an den Server 141 zu übertragenden Informationen als Funksignal an das Mobilfunk-Kommunikationsnetz 130 abgestrahlt werden.

Die Sensoren 110, 120 können beispielsweise über Klettverschlüsse leicht am Fahrrad montiert werden und jederzeit wieder abgenommen werden. Alternativ können zur Befestigung auch Kabelbinder verwendet werden. Die Magnete 116 können in gleicher Weise an dem Pedalkurbelarm des Fahrrads angebracht werden. Die Magnete 106 können beispielsweise durch kleine Schraubverbindungen an die Speichen des Fahrrads 102 montiert werden. Alternativ sind für die Magnete 116, 106 auch Klebeverbindungen möglich, entweder Permanentverbindungen oder wieder abnehmbare Verbindungen durch Klebefolie.

Das Fahrrad 102 kann eine Rennrad, ein Mountain-Bike, ein Tourenfahrrad, ein Kinderfahrrad oder jede andere Art von Fahrrad sein. Das Sensorsystem 100 kann daneben auch an einem Motorrad angebracht werden, das auch unter den Begriff des Fahrrads fällt. Das Sensorsystem kann an jeder Art von Gerät angebracht werden, das über zumindest ein Rad verfügt, welches sich drehen kann, beispielsweise an einem Auto, einem LKW oder sogar an einem Zahnrad eines Motors. Mit dem Sensorsystem kann eine Umdrehung des Rades erfasst und ausgewertet werden.

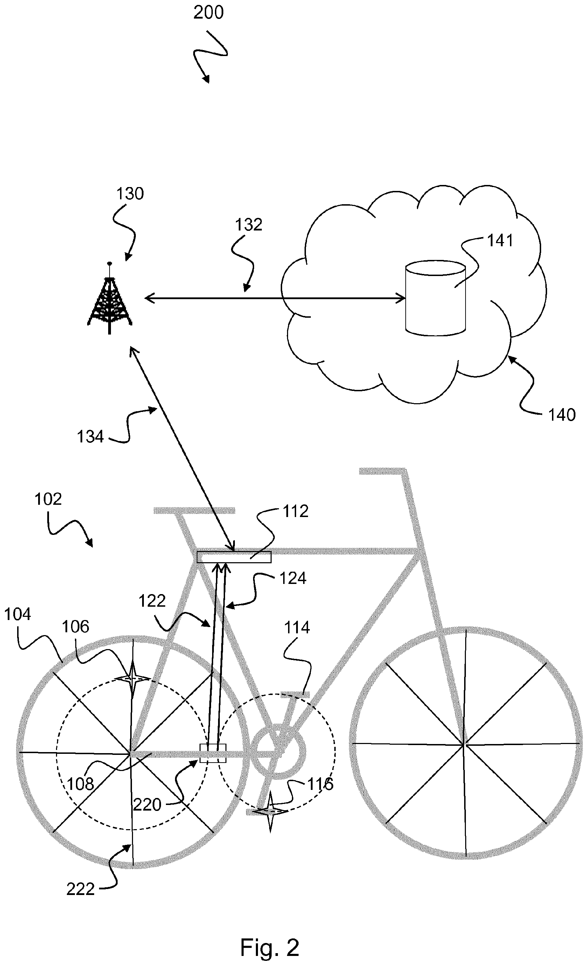

Fig. 2 zeigt eine schematische Darstellung eines Sensorsystems 200 zur Montage an einem Fahrrad 102 gemäß einer nicht erfindungsgemäßen zweiten Variante.

Die hier beschriebene zweite Variante des Sensorsystems 200 entspricht der oben zu Figur 1 beschriebenen ersten Variante. Im Unterschied dazu kann der Magnet 106 an einer Speiche 222 des Fahrrads 102 montiert sein. Der zweite Magnet 116 kann an einem Pedal des Fahrrads montiert sein und die beiden in Figur 1 beschriebenen Sensoren 110, 120 können in einem gemeinsamen Sensorgehäuse 220 untergebracht sein, das an einer Kettenstrebe des Fahrrads 102 montiert sein kann. Beide Sensoren können in dem Gehäuse in einem gewissen Abstand, beispielsweise etwa 1cm bis 10cm, zueinander angeordnet sein. Alternativ kann auch ein Doppelsensor als einstückiges Teil realisiert werden, der beide Sensoren umfasst, die in einem gewissen Abstand, beispielsweise etwa 1cm bis 10cm, zueinander angeordnet sind.

Dabei kann jeder Sensor separat die Bewegung des entsprechenden Magneten 106, 116 erfassen. Beispielsweise kann mit dem ersten Sensor 110 die Radumdrehung bestimmt werden und damit die Geschwindigkeit des Fahrrads. Mit dem zweiten Sensor 120 kann die Umdrehung des Pedalkranzes des Fahrrads 102 bestimmt werden und damit die Trittfrequenz ("Cadence") des Fahrrads.

Mit der Unterbringung in einem gemeinsamen Gehäuse oder der Implementierung es Doppelsensors als ein Teil wird eine einfachere Handhabung des Sensorsystems möglich, da eine einmalige Montage des Gehäuses mit den beiden Sensoren an der Rahmenstrebe des Fahrrads ausreicht, um gleichzeitig eine Geschwindigkeits- und Trittfrequenzmessung zu realisieren, d.h. das Sensorsystem ermöglicht eine leichte Montage eines Speed&Cadence Sensors.

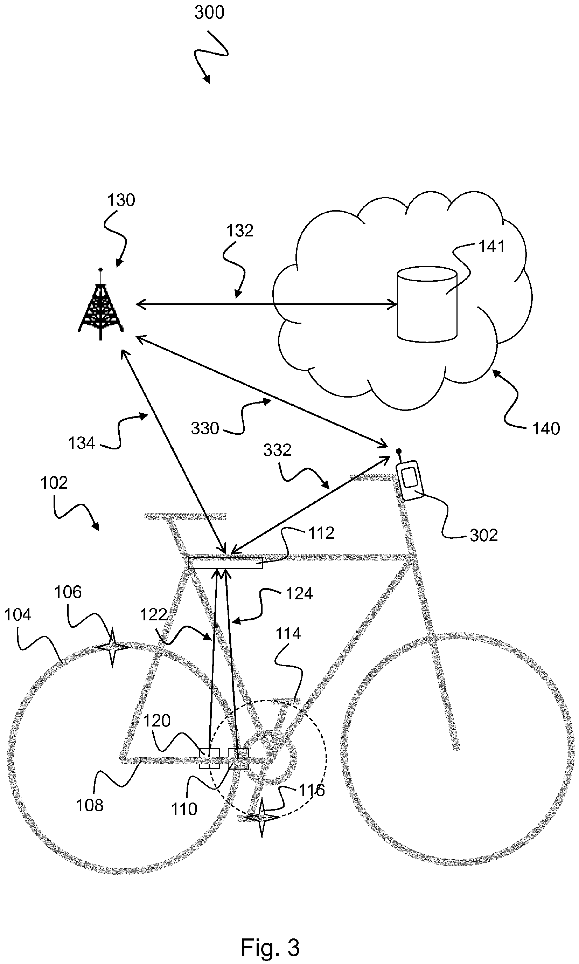

Fig. 3 zeigt eine schematische Darstellung eines Sensorsystems 300 zur Montage an einem Fahrrad 102 gemäß einer nicht erfindungsgemäßen dritten Variante.

Die hier beschriebene dritte Variante des Sensorsystems 200 entspricht den oben zu den Figuren 1 und 2 beschriebenen ersten und zweiten Varianten. Im Unterschied dazu kann der Fahrer über eine App an seinem Smartphone (oder einem anderen Gerät mit Mobilfunkschnittstellenunterstützung) auf die von der Kommunikationseinheit 112 verarbeiteten Informationen über eine Funkschnittstelle 332 zugreifen. Die Funkschnittstelle unterstützt dabei beispielsweise ein Bluetooth-Datenprotokoll oder ein anderes Nahbereichs-Funkprotokoll. Zusätzlich oder alternativ kann der Fahrer über die Mobilfunkschnittstelle 330 seines Smartphones auf von dem Server 141 aufbereitete Daten zugreifen, beispielsweise Daten, die ihn in Relation zu anderen Fahrradfahrern setzen oder Referenzdaten, die im Server 141 gespeichert sind.

Über sein Smartphone können dem Fahrer wichtige Informationen bezüglich seines Fahrverhaltens mitgeteilt werden, beispielsweise entsprechend der unten zu Figur 5 näher beschriebenen Szenarien.

Mit dem Sensorsystem 300 kann der Fahrer sich auf seine Fahrsituation konzentrieren. Er braucht nicht mehr ständig auf seine am Fahrrad installierten Messgeräte zu schauen, da eine automatisierte Übertragung zu dem Server 141 und damit einer Leitzentrale bzw. einem Backend stattfindet, die ihm im Gegenzug alle nötigen Informationen über sein eigenes Fahrverhalten, über Abweichungen von vorgegebenen Referenzwerten und über seine Fahrleistung in Relation zu anderen Fahrradfahrern liefert. Falls nötig liefert die Leitzentrale eventuell erforderliche Alarme, um den Fahrradfahrer oder einen Mitarbeiter in der Leitzentrale auf eventuell vorliegende Abweichungen aufmerksam zu machen.

So kann die Leitzentrale bei einem schweren Unfall den Notarzt rufen, so dass der Fahrradfahrer nicht mehr auf Hilfe durch andere Personen angewiesen ist, die zufällig am Unfallort sind.

Das Sensorsystem 300 ermöglicht es, die zahlreichen zur Verfügung stehenden mit Sensoren erfassten Informationen, wie beispielsweise Geschwindigkeit und Trittfrequenz des Fahrrads, für den Fahrradfahrer entsprechend seiner Fahrsituation leicht verständlich darzustellen und notwendige Entscheidungen, falls erforderlich, automatisiert zu treffen, so dass der Fahrradfahrer sich auf das Fahrradfahren konzentrieren kann..

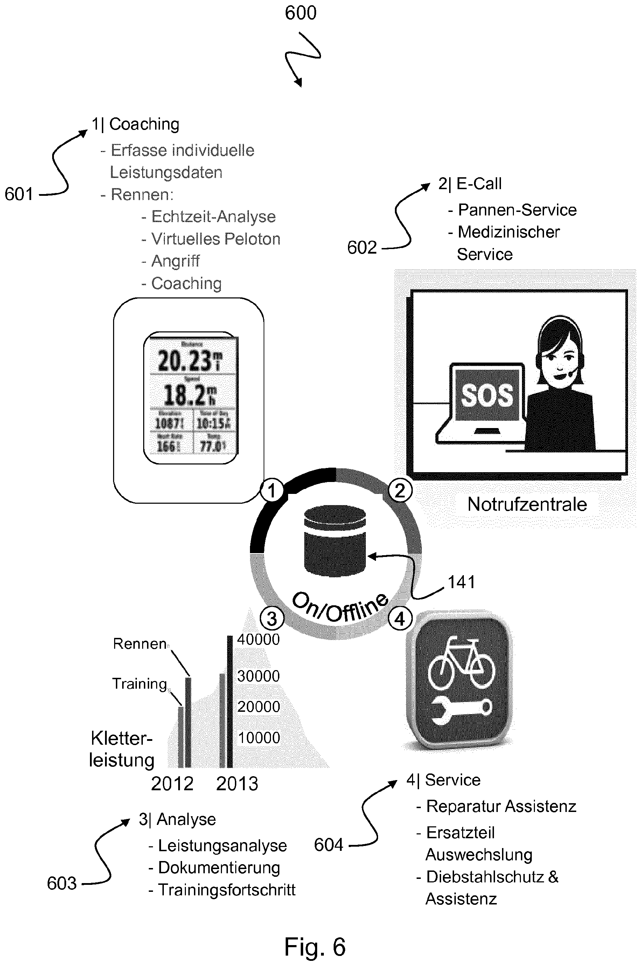

Somit wird mit dem Sensorsystem 300 dem Fahrradfahrer beim Fahrradfahren die Aufnahme und Verarbeitung von Informationen erleichtert, so dass er sich auf das Fahrradfahren konzentrieren kann. Außerdem wird das Fahrrad mit dem Sensorsystem 300 elektronisch vernetzt, so dass die unten in Figur 6 beschriebenen Anwendungsfälle realisiert werden können, die sowohl dem Fahrer als auch dem Fahrradhersteller einen Mehrwert bringen. Insbesondere ist durch die Aufnahme und Verarbeitung der von dem Sensorsystem 300 gelieferten Informationen ein verbesserter Diebstahlschutz des Fahrrads möglich.

Dank der Auswertung der Daten in der Leitzentrale oder auf dem Smartphone kann auch stets der aktuelle Stand von Verschleißteilen wie der Kette im Blick behalten werden und der Fahrer entsprechend informiert werden, wenn ein Teil ersetzt werden sollte. Dieses Teil kann dann auch direkt über die Cloud 140 oder die App im Smartphone 302 bestellt werden. Die On-Board-Unit bzw. die Kommunikationseinheit 112 kann unsichtbar im Fahrradrahmen untergebracht sein und somit möglichen Dieben nicht auffallen. Mit dem GPS-Sender kann das Fahrrad auch jederzeit geortet werden, so dass der Fahrer stets darüber informiert ist, wo sich sein Fahrrad gerade befindet.

Fig. 4 zeigt eine schematische Darstellung eines Sensorsystems 400 zur Montage an einem Fahrrad 102 gemäß einer nicht erfindungsgemäßen vierten Variante.

Die Kommunikationseinheit 112 umfasst eine SIM-Karte 414, mit der eine Kommunikationsverbindung über das Mobilfunk-Kommunikationsnetz 130 hergestellt werden kann. Die Kommunikationseinheit 112 kann ferner zumindest eine der folgenden weiteren Schnittstellen umfassen: eine Bluetooth-Schnittstelle 404, 408, beispielsweise eine Bluetooth Low Energy (BLE) Schnittstelle sowie eine Satelliten-Navigationsschnittstelle 416, beispielsweise eine GPS-Schnittstelle oder eine GNSS-Schnittstelle.

Die Kommunikationseinheit 112, auch als On-Board-Unit bezeichnet, besitzt eine SIM-Karte 414, einen Mikroprozessor, eine Sensorschnittstelle 402 für einen Geschwindigkeitssensor (drahtgebunden oder drahtlos), eine Sensorschnittstelle 404 für einen Trittfrequenzsensor (drahtgebunden oder drahtlos) und zur Ortung eine Satellitennavigationsschnittstelle 416. Die Energieversorgung für die Kommunikationseinheit 112 stammt von einem Akku 410, der beispielsweise über einen Dynamo aufgeladen werden kann. Alternativ dazu gibt es "autonome" Energiesysteme, mit denen auf einen Akku vollständig oder teilweise verzichtet werden kann.

Die Kommunikationseinheit 102 kann ferner einen Bewegungssensor 450, z.B. einen Beschleunigungs- und Lagesensor umfassen, der auch beim Abstellen des Fahrrads bzw. Versetzen der Kommunikationseinheit 102 in einen Ruhezustand aktiv bleibt, um den Ruhezustand des Fahrrads zu überwachen und bei unerlaubter Bewegung des Fahrrads, z.B. bei einem Diebstahl, zumindest die Satellitennavigationsschnittstelle 416 zu aktivieren, damit eine Ortung der Position des Fahrrads möglich ist.

Mit den Informationen, die von der Kommunikationseinheit 112 an den Server 141 übertragen werden, kann der Server141 dann zusammen mit Informationen aus dem GPS die Fahrleistung und damit den wahrscheinlichen Verschleiß von Bremsen und Kette errechnen. Über die eingebaute SIM-Karte 414 können die Daten direkt an die Cloud-Plattform 140 gesendet werden, und über eine App hat der Fahrer stets Zugriff auf seine Daten. Sobald Abnutzung droht, kann die App den Austausch der betroffenen Teile empfehlen.

Die App kann neben verschiedenen Fahrdaten auch die zurückgelegte Strecke anzeigen, beispielsweise auf einer Karte. Da das Rad per App geortet werden kann, bietet eine unsichtbar in den Fahrradrahmen eingebaute On-Board-Unit einen idealen Diebstahlschutz. Ist das Fahrrad abhandengekommen, so kann der Eigentümer sein Fahrrad per App wieder ausfindig machen. Falls ein Unfall passiert, können die aus den Sensoren erfassten Informationen einen Alarm generieren und eine entsprechende Reaktion der Leitstelle in der Cloud bewirken. Alternativ oder zusätzlich kann der Alarm auf das Smartphone des Fahrers gesendet werden. Reagiert der Fahrer nicht, so können die Rettungsdienste verständigt werden. Mit der entsprechenden Auswertung in der Leitzentrale oder auf der App des Fahrers können echte Unfälle als solche erkannt werden und nicht etwa schon dynamisches Fahren.

Fig. 5 zeigt eine schematische Darstellung eines Sensorsystems 500 zur Montage an einem Fahrrad 102 gemäß einer Ausführungsform der Erfindung.

Die hier beschriebene Ausführungsform des Sensorsystems 500 entspricht einer Kombination der oben zu den Figuren 2, 3 und 4 beschriebenen zweiten, dritten und vierten Varianten. Dabei sind die Sensoren 110, 120 in der Kommunikationseinheit 112 angeordnet bzw. in dieser integriert und die ganze Kommunikationseinheit 112 ist an der Stelle des Fahrrads 102 angebracht, an der die Sensoren in Wechselwirkung zu den beiden Magneten 106, 116 stehen, d.h. beispielsweise an einer Kettenstrebe des Fahrrads 102. In dieser Ausführungsform können die beiden Sensorschnittstellen 122, 124 als interne Schnittstellen der Kommunikationseinheit 112 ausgeführt sein, d.h. beispielsweise drahtgebunden als kurze Leitungen innerhalb der Kommunikationseinheit 112, z.B. auf einer Platine zu den Anschlüssen des Mikrocontrollers 412. Die Sensoren 110, 120 können somit als Teil der Platine realisiert sein, auf der die beispielsweise in Figur 4 dargestellten Komponenten der Kommunikationseinheit 112 montiert sein können.

Das Sensorsystem 500 kann somit beispielsweise als eine Platine realisiert sein, auf der sämtliche benötigte Komponenten angebracht sind. Die Platine kann von einem Gehäuse umfasst sein, das dem Schutz der Platine dient.

Fig. 6 zeigt eine schematische Darstellung von Anwendungsfällen 600 für ein Sensorsystem zur Montage an einem Fahrrad gemäß einer beispielhaften Ausführungsform.

Die Informationen, die durch das oben beschriebene Sensorsystem gesammelt wurden und auf dem Server 141 vorliegen, können für eine Vielzahl von Anwendungsfällen 600 genutzt werden. Beispielhaft seien hier die vier Hauptanwendungsfälle 1) Coaching 601, 2) E-Call 602, 3) Analyse 603 und 4) Service 604 genannt.

Beim Coaching 601 können individuelle Leistungsdaten erfasst werden, die beispielsweise im Rennen von Bedeutung sind. Beispielsweise können diese Leistungsdaten für die Szenarien Echtzeit-Analyse, Virtuelles Peloton, Angriff und Coaching ausgewertet werden

Über den E-Call 602 kann ein Pannen-Service oder ein medizinischer Service informiert werden.

Über die Analyse 603 kann eine Leistungsanalyse, Dokumentierung und Ermittlung des Trainingsfortschritts durchgeführt werden.

Der Service 604 umfasst beispielsweise Reparatur Assistenz, Ersatzteillieferung, Auswechslung, Diebstahlschutz und Hilfestellung sowie weitere hier nicht genannte Leistungen.

Beispielhaft seien im Folgenden einige Anwendungsfälle genannt, welche mit dem hier beschriebenen Sensorsystem möglich sind.

Aufgrund der Sensorik kann das Fahrrad bei einem Unfall selbstständig den Notarzt rufen oder eine neue Kette bestellen, wenn die alte ausgeleiert ist. Bei dem so mittels der Kommunikationseinheit vernetzten Fahrrad können Daten autonom und ohne weiteres Zutun des Fahrers auf den Server 141 gesendet werden.

Mit dem Sensorsystem lässt sich feststellen, ob das Fahrrad gerade in einen Unfall verwickelt ist oder jemand bei einer Bergfahrt wirklich gestürzt ist und das Sensorsystem kann im Ernstfall den Notruf alarmieren. Beispielsweise kann diese Information über Crash-Sensoren erfasst werden, welche die Lage und Geschwindigkeit des Fahrrads messen können.

Dies kann vollkommen autonom passieren unter Verwendung der Kommunikationseinheit 112, die von außen unsichtbar im Fahrradrahmen integriert sein kann. Die Sensoren registrieren Trittfrequenz und Aufprallgeschwindigkeit; daraus lässt sich die Schwere eines Unfalls herleiten.

Über die Kommunikationseinheit kann schnell die Position des Fahrrads festgestellt werden. Wenn der Fahrer (oder der Server in der Cloud bemerkt), dass sein Fahrrad abhandengekommen ist, kann er über die Smartphone-App erfahren, wo sich sein Fahrrad gerade befindet. Notfalls kann er (oder der Server in der Cloud) dann direkt der Polizei mitteilen, dass sein Fahrrad gestohlen wurde, und der Polizei die genaue Position seines Fahrrades mitteilen.

Die erfassten Informationen können autonom und ohne weiteres Zutun des Fahrers, sogar unbemerkt vom Fahrer, regelmäßig auf den Server 141 gesendet werden. Das Smartphone muss nicht notwendigerweise mitgeführt werden. Das Smartphone benötigt keine direkte Kommunikation zum Fahrrad. Diese Kommunikation kann über die Cloud erfolgen.

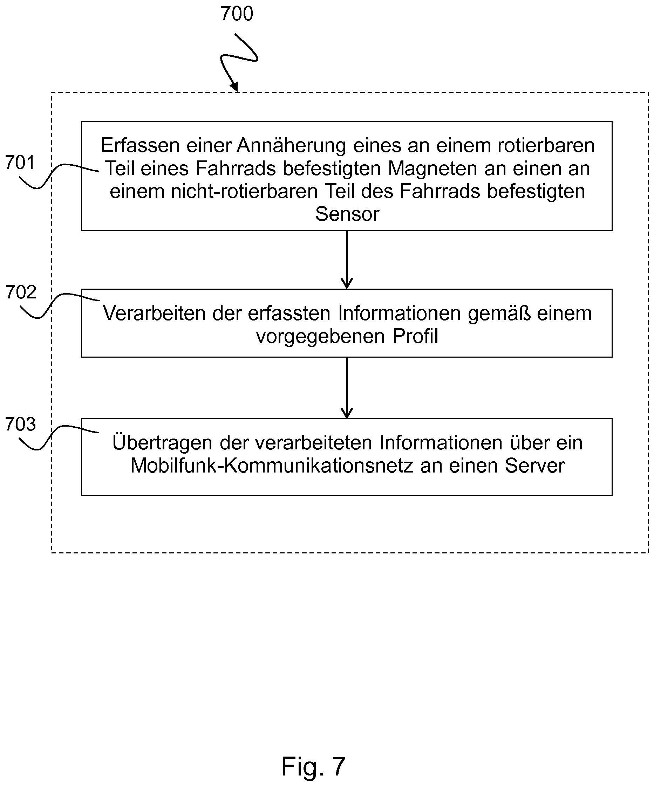

Fig. 7 zeigt eine schematische Darstellung eines Verfahrens 700 zum Erfassen von Informationen über ein Fahrrad gemäß einer beispielhaften Ausführungsform.

Das Verfahren 700 umfasst einen ersten Schritt des Erfassens 701 einer Annäherung eines an einem rotierbaren Teil des Fahrrads befestigten Magneten an einen an einem nicht-rotierbaren Teil des Fahrrads befestigten Sensor. Das Verfahren umfasst einen zweiten Schritt des Verarbeitens 702 der erfassten Informationen gemäß einem vorgegebenen Profil. Das Verfahren umfasst einen dritten Schritt des Übertragens 703 der verarbeiteten Informationen über ein Mobilfunk-Kommunikationsnetz an einen Server. Mit dem Verfahren 700 können die oben zu den Figuren 1 bis 5 beschriebenen Aufgaben des Sensorsystems sowie die in Figur 6 beschriebenen Szenarien realisiert werden.

Ein Aspekt umfasst auch ein Computerprogrammprodukt, das direkt in den internen Speicher eines digitalen Computers geladen werden kann und Softwarecodeabschnitte umfasst, mit denen das zu Fig. 6 beschriebene Verfahren 700 ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 700 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können.

### Bezugszeichenliste

- 100:: Sensorsystem, erste Ausführungsform
- 102:: Fahrrad
- 104:: rotierbares Teil des Fahrrads
- 106:: erster Magnet
- 116:: zweiter Magnet
- 108:: nicht rotierbares Teil des Fahrrads
- 110:: erster Sensor
- 112:: Kommunikationseinheit bzw. On-Board-Unit
- 120:: zweiter Sensor
- 122:: erste Sensorschnittstelle
- 124:: zweite Sensorschnittstelle
- 130:: Mobilfunk-Kommunikationsnetz bzw. Mobilfunkzugangsnetz
- 134:: Mobilfunk-Schnittstelle
- 132:: Server-Schnittstelle, Cloud-Schnittstelle
- 140:: Cloud bzw. Rechnernetz
- 141: Server

- 200:: Sensorsystem, zweite Ausführungsform
- 220:: gemeinsames Gehäuse
- 222:: Speiche

- 300:: Sensorsystem, dritte Ausführungsform
- 302:: Smartphone mit App bzw. mobiles Kommunikationsgerät
- 330:: Mobilfunkschnittstelle des Smartphones
- 332:: Nahbereichsfunkschnittstelle zwischen Smartphone und On-Board-Unit

- 400:: Sensorsystem, vierte Ausführungsform
- 402:: Sensorschnittstelle drahtgebunden
- 404:: Sensorschnittstelle drahtlos
- 406:: Mobilfunkschnittstelle
- 408:: Funkschnittstelle Nahbereich, z.B. Bluetooth
- 410:: Akku
- 412:: Mikrocontroller
- 414:: SIM Modul
- 436:: Satellitennavigations-Schnittstelle
- 440:: Satellitenpositionssystem

- 600:: Anwendungsfälle des Sensorsystems
- 601:: Coaching
- 602:: E-Call, automatischer Anrufservice
- 603:: Analyse
- 604:: Service

- 700:: Verfahren zum Erfassen von Informationen über ein Fahrrad
- 701:: erster Schritt: Erfassen
- 702:: zweiter Schritt: Verarbeiten
- 703:: dritter Schritt: Übertragen

## Patentansprüche

1. Sensorsystem (100) zur Montage an einem Fahrrad (102), mit:
einem an ein rotierbares Teil (104) des Fahrrads (102) montierbaren Magneten (106);
einem an ein zweites rotierbares Teil (114) des Fahrrads (102) montierbaren zweiten Magneten (116);
einem an ein nicht rotierbares Teil (108) des Fahrrads (102) montierbaren Sensor (110), der ausgelegt ist, bei einer Drehbewegung des rotierbaren Teils (104) Informationen über eine Annäherung an den Magneten (106) zu erfassen;
einem an dem nicht rotierbaren Teil (108) des Fahrrads (102) montierbaren zweiten Sensor (120), der ausgelegt ist, bei einer Drehbewegung des zweiten rotierbaren Teils (114) Informationen über eine Annäherung des zweiten Magneten (116) zu erfassen,
und
einer an das Fahrrad (102) montierbaren Kommunikationseinheit (112), welche ausgebildet ist, die von dem Sensor (110) erfassten Informationen gemäß einem vorgegebenen Profil zu verarbeiten und die verarbeiteten Informationen über ein Mobilfunk-Kommunikationsnetz (130) an einen Server (141) zu übertragen,
wobei das vorgegebene Profil die vorgegebenen Abmessungen des Fahrrads umfasst, insbesondere den Radumfang des Fahrrads,
wobei die Kommunikationseinheit (112) folgendes umfasst:
eine Sensorschnittstelle (122, 402), die ausgelegt ist, die von dem Sensor (110) und dem zweiten Sensor (120) erfassten Informationen drahtgebunden oder drahtlos an die Kommunikationseinheit (112) zu übertragen;
einen Mikrocontroller (412), der ausgelegt ist, die von der Sensorschnittstelle (122) empfangenen Informationen zu verarbeiten; und
eine Mobilfunkschnittstelle (134, 406), die ausgelegt ist, die von dem Mikrocontroller (412) verarbeiteten Informationen über das Mobilfunk-Kommunikationsnetz (130) zu übertragen; und
wobei der Sensor (110) und der zweite Sensor (120) in der Kommunikationseinheit (112) integriert sind, die an einer Kettenstrebe eines Rahmens des Fahrrads (102) montierbar ist.

2. Sensorsystem (100) nach Anspruch 1,
wobei der Sensor (110) ein Magnetsensor, insbesondere ein Reed-Sensor oder ein Hall-Sensor ist.

3. Sensorsystem (100) nach Anspruch 1 oder 2,
wobei die Sensorschnittstelle (122, 402) ausgelegt ist, die von dem Sensor (110) erfassten Informationen über Bluetooth an die Kommunikationseinheit (112) zu übertragen.

4. Sensorsystem (100) nach einem der vorstehenden Ansprüche,
wobei die Kommunikationseinheit (112) einen Akku (410), insbesondere einen über ein Induktionsladeverfahren oder einen Dynamo ladbaren Akku umfasst, der ausgelegt ist, die Kommunikationseinheit (112) mit Energie zu versorgen.

5. Sensorsystem (200) nach einem der vorstehenden Ansprüche,
wobei das rotierbare Teil (104) ein Teil eines Rades des Fahrrads (102) ist, insbesondere eine Speiche (222); und
wobei das nicht rotierbare Teil (108) ein Rahmensegment des Fahrrads (102) umfasst, an dem das Rad befestigt ist.

6. Sensorsystem (400) nach einem der vorstehenden Ansprüche,
wobei der Mikrocontroller (412) ausgelegt ist, basierend auf den von der Sensorschnittstelle (122, 402) empfangenen Informationen eine Geschwindigkeit des Fahrrads (102) zu bestimmen.

7. Sensorsystem (100) nach einem der vorstehenden Ansprüche,
wobei das zweite rotierbare Teil (114) ein Pedalkurbelarm des Fahrrads (102) ist; und
wobei das nicht rotierbare Teil (108) ein Rahmensegment des Fahrrads (102) umfasst, an dem der Pedalkurbelarm befestigt ist.

8. Sensorsystem (100) nach einem der vorstehenden Ansprüche,
wobei der Mikrocontroller (412) ausgelegt ist, basierend auf den von der Sensorschnittstelle (122, 124) empfangenen Informationen eine Trittfrequenz des Fahrrads (102) zu bestimmen.

9. Sensorsystem (100, 200) nach einem der vorstehenden Ansprüche, ferner mit:
zumindest einer an das Fahrrad (102) montierbaren Antenne, die mit der Mobilfunkschnittstelle (134) koppelbar ist und ausgelegt ist, die an den Server (141) zu übertragenden Informationen als Funksignal an das Mobilfunk-Kommunikationsnetz (130) abzustrahlen.

10. Sensorsystem (300) nach Anspruch 9,
wobei die Mobilfunkschnittstelle (134) ferner ausgelegt ist, die von dem Mikrocontroller (412) empfangenen verarbeiteten Informationen über das Mobilfunk-Kommunikationsnetz (130) an eine Smartphone-App (302), insbesondere eine Smartphone-App eines Nutzers des Fahrrads (102) zu übertragen.

11. Sensorsystem (400) nach einem der vorstehenden Ansprüche,
wobei die Kommunikationseinheit (102) ferner folgendes umfasst:
eine SIM-Karte (414), die ausgelegt ist, eine Kommunikationsverbindung über das Mobilfunk-Kommunikationsnetz (130) herzustellen; und
zumindest eine der folgenden weiteren Schnittstellen:
eine Bluetooth-Schnittstelle (404, 408), insbesondere eine Bluetooth Low Energy (BLE) Schnittstelle,
eine Satelliten-Navigations Schnittstelle (416), insbesondere eine GPS-Schnittstelle oder eine GNSS-Schnittstelle.

12. Fahrrad mit einem Sensorsystem nach einem der Ansprüche 1 bis 11.

13. Verfahren (700) zum Erfassen von Informationen über ein Fahrrad, mit den folgenden Schritten:
Erfassen (701) einer Annäherung eines an einem rotierbaren Teil des Fahrrads befestigten Magneten an einen an einem nicht-rotierbaren Teil des Fahrrads befestigten Sensor;
Erfassen einer Annäherung eines an einem zweiten rotierbaren Teil des Fahrrads befestigten zweiten Magneten an einen an dem nicht-rotierbaren Teil des Fahrrads befestigten zweiten Sensor;
Verarbeiten (702) der erfassten Informationen gemäß einem vorgegebenen Profil durch eine an das Fahrrad (102) montierbare Kommunikationseinheit (112), wobei das vorgegebene Profil die vorgegebenen Abmessungen des Fahrrads umfasst, insbesondere den Radumfang des Fahrrads; und
Übertragen (703) der verarbeiteten Informationen durch die Kommunikationseinheit (112) über ein Mobilfunk-Kommunikationsnetz an einen Server,
wobei die Kommunikationseinheit (112) folgendes umfasst:
eine Sensorschnittstelle (122, 402), die ausgelegt ist, die von dem Sensor (110) und dem zweiten Sensor (120) erfassten Informationen drahtgebunden oder drahtlos an die Kommunikationseinheit (112) zu übertragen;
einen Mikrocontroller (412), der ausgelegt ist, die von der Sensorschnittstelle (122) empfangenen Informationen zu verarbeiten; und
eine Mobilfunkschnittstelle (134, 406), die ausgelegt ist, die von dem Mikrocontroller (412) verarbeiteten Informationen über das Mobilfunk-Kommunikationsnetz (130) zu übertragen; und
wobei der Sensor (110) und der zweite Sensor (120) in der Kommunikationseinheit (112) integriert sind, die an einer Kettenstrebe eines Rahmens des Fahrrads (102) montierbar ist.

## Claims

1. Sensor system (100) for mounting on a bicycle (102), having:
a magnet (106) which can be mounted on a rotatable part (104) of the bicycle (102);
a second magnet (116) which can be mounted on a second rotatable part (114) of the bicycle (102);
a sensor (110) which can be mounted on a non-rotatable part (108) of the bicycle (102) and is designed to capture information relating to an approach to the magnet (106) during a rotational movement of the rotatable part (104);
a second sensor (120) which can be mounted on the non-rotatable part (108) of the bicycle (102) and is designed to capture information relating to an approach of the second magnet (116) during a rotational movement of the second rotatable part (114),
and
a communication unit (112) which can be mounted on the bicycle (102) and is configured to process the information captured by the sensor (110) according to a predefined profile and to transmit the processed information to a server (141) via a mobile radio communication network (130),
wherein the predefined profile comprises the predefined dimensions of the bicycle, in particular the wheel circumference of the bicycle,
wherein the communication unit (112) comprises the following:
a sensor interface (122, 402) which is designed to transmit the information captured by the sensor (110) and the second sensor (120) to the communication unit (112) in a wired or wireless manner;
a microcontroller (412) which is designed to process the information received from the sensor interface (122); and
a mobile radio interface (134, 406) which is designed to transmit the information processed by the microcontroller (412) via the mobile radio communication network (130); and
wherein the sensor (110) and the second sensor (120) are integrated in the communication unit (112) which can be mounted on a chain stay of a frame of the bicycle (102) .

2. Sensor system (100) according to Claim 1,
wherein the sensor (110) is a magnetic sensor, in particular a reed sensor or a Hall sensor.

3. Sensor system (100) according to Claim 1 or 2,
wherein the sensor interface (122, 402) is designed to transmit the information captured by the sensor (110) to the communication unit (112) via Bluetooth.

4. Sensor system (100) according to one of the preceding claims,
wherein the communication unit (112) comprises a rechargeable battery (410), in particular a rechargeable battery which can be charged using an induction charging method or a dynamo and is designed to supply the communication unit (112) with energy.

5. Sensor system (200) according to one of the preceding claims,
wherein the rotatable part (104) is a part of a wheel of the bicycle (102), in particular a spoke (222); and
wherein the non-rotatable part (108) comprises a frame segment of the bicycle (102) to which the wheel is fastened.

6. Sensor system (400) according to one of the preceding claims,
wherein the microcontroller (412) is designed to determine a speed of the bicycle (102) on the basis of the information received from the sensor interface (122, 402) .

7. Sensor system (100) according to one of the preceding claims,
wherein the second rotatable part (114) is a pedal crank arm of the bicycle (102); and
wherein the non-rotatable part (108) comprises a frame segment of the bicycle (102) to which the pedal crank arm is fastened.

8. Sensor system (100) according to one of the preceding claims,
wherein the microcontroller (412) is designed to determine a pedal frequency of the bicycle (102) on the basis of the information received from the sensor interface (122, 124).

9. Sensor system (100, 200) according to one of the preceding claims, also having:
at least one antenna which can be mounted on the bicycle (102), can be coupled to the mobile radio interface (134) and is designed to emit the information to be transmitted to the server (141) to the mobile radio communication network (130) as a radio signal.

10. Sensor system (300) according to Claim 9,
wherein the mobile radio interface (134) is also designed to transmit the processed information received from the microcontroller (412) to a smartphone app (302), in particular a smartphone app belonging to a user of the bicycle (102), via the mobile radio communication network (130) .

11. Sensor system (400) according to one of the preceding claims,
wherein the communication unit (102) also comprises the following:
a SIM card (414) which is designed to establish a communication connection via the mobile radio communication network (130); and
at least one of the following further interfaces:
a Bluetooth interface (404, 408), in particular a Bluetooth Low Energy (BLE) interface,
a satellite navigation interface (416), in particular a GPS interface or a GNSS interface.

12. Bicycle having a sensor system according to one of Claims 1 to 11.

13. Method (700) for capturing information relating to a bicycle, having the following steps of:
capturing (701) when a magnet fastened to a rotatable part of the bicycle approaches a sensor fastened to a non-rotatable part of the bicycle;
capturing when a second magnet fastened to a second rotatable part of the bicycle approaches a second sensor fastened to the non-rotatable part of the bicycle;
processing (702) the captured information according to a predefined profile by means of a communication unit (112) which can be mounted on the bicycle (102), wherein the predefined profile comprises the predefined dimensions of the bicycle, in particular the wheel circumference of the bicycle; and
transmitting (703) the processed information to a server via a mobile radio communication network by means of the communication unit (112),
wherein the communication unit (112) comprises the following:
a sensor interface (122, 402) which is designed to transmit the information captured by the sensor (110) and the second sensor (120) to the communication unit (112) in a wired or wireless manner;
a microcontroller (412) which is designed to process the information received from the sensor interface (122); and
a mobile radio interface (134, 406) which is designed to transmit the information processed by the microcontroller (412) via the mobile radio communication network (130); and
wherein the sensor (110) and the second sensor (120) are integrated in the communication unit (112) which can be mounted on a chain stay of a frame of the bicycle (102) .

## Revendications

1. Système de capteur (100) destiné à être monté sur une bicyclette (102), doté :
d'un aimant (106) pouvant être monté sur une partie en rotation (104) de la bicyclette (102) ;
d'un deuxième aimant (116) pouvant être monté sur une deuxième partie en rotation (114) de la bicyclette (102) ;
d'un capteur (110) pouvant être monté sur une partie non en rotation (108) de la bicyclette (102), lequel est disposé pour saisir des informations au moyen d'une approche de l'aimant (106) lors d'une révolution de la partie en rotation (104) ;
d'un deuxième capteur (120) pouvant être monté sur la partie non en rotation (108) de la bicyclette (102), lequel est disposé pour saisir des informations au moyen d'une approche du deuxième aimant (116) lors d'une révolution de la deuxième partie en rotation (114),
et
d'une unité de communication (112) pouvant être montée sur la bicyclette (102), laquelle est conçue pour traiter les informations saisies par le capteur (110) selon un profil prédéfini et transmettre les informations traitées à un serveur (141) par un réseau de communication mobile (130),
dans lequel le profil prédéfini comprend les dimensions prédéfinies de la bicyclette, en particulier la circonférence des roues de la bicyclette,
dans lequel l'unité de communication (112) comprend ce qui suit :
une interface de capteur (122, 402) disposée pour transmettre à l'unité de communication (112) les informations saisies par le capteur (110) et le deuxième capteur (120), de manière filaire ou sans fil ;
un microcontrôleur (412) disposé pour traiter les informations reçues depuis l'interface de capteur (122) ; et
une interface de téléphonie mobile (134, 406) disposée pour transmettre les informations traitées par le microcontrôleur (412) par le réseau de communication mobile (130) ; et
dans lequel le capteur (110) et le deuxième capteur (120) sont intégrés dans l'unité de communication (112), laquelle peut être montée à une base à cadre de la bicyclette (102).

2. Système de capteur (100) selon la revendication 1, dans lequel le capteur (110) est un capteur magnétique, en particulier un capteur reed ou un capteur à effet Hall.

3. Système de capteur (100) selon la revendication 1 ou 2,
dans lequel l'interface de capteur (122, 402) est disposée pour transmettre les informations saisies par le capteur (110) à l'unité de communication (112) par Bluetooth.

4. Système de capteur (100) selon l'une des revendications précédentes,
dans lequel l'unité de communication (112) comprend un accumulateur (410), en particulier un accumulateur pouvant être chargé par un procédé de recharge par induction ou par une dynamo, disposé pour alimenter en énergie l'unité de communication (112).

5. Système de capteur (200) selon l'une des revendications précédentes,
dans lequel la partie en rotation (104) est une partie d'une roue de la bicyclette (102), en particulier un rayon (222) ; et
dans lequel la partie non en rotation (108) comprend un segment de cadre de la bicyclette (102), sur lequel la roue est fixée.

6. Système de capteur (400) selon l'une des revendications précédentes,
dans lequel le microcontrôleur (412) est disposé pour déterminer une vitesse de la bicyclette (102) en se basant sur les informations reçues de l'interface de capteur (122, 402).

7. Système de capteur (100) selon l'une des revendications précédentes,
dans lequel la deuxième partie en rotation (114) est un bras de manivelle de pédalier de la bicyclette (102) ; et
dans lequel la partie non en rotation (108) comprend un segment de cadre de la bicyclette (102), sur lequel le bras de manivelle de pédalier est fixé.

8. Système de capteur (100) selon l'une des revendications précédentes,
dans lequel le microcontrôleur (412) est disposé pour déterminer une cadence de la bicyclette (102) en se basant sur les informations reçues de l'interface de capteur (122, 124).

9. Système de capteur (100, 200) selon l'une des revendications précédentes, doté en outre : d'au moins une antenne pouvant être montée sur la bicyclette (102), pouvant être couplée à l'interface de téléphonie mobile (134) et disposée pour émettre des informations à transmettre au serveur (141) en tant que signaux radio au réseau de communication mobile (130).

10. Système de capteur (300) selon la revendication 9, dans lequel l'interface de téléphonie mobile (134) est en outre disposée pour transmettre les informations traitées reçues du microcontrôleur (412) à une application d'appareil mobile (302) par le réseau de communication mobile (130), en particulier une application d'appareil mobile d'un utilisateur de la bicyclette (102).

11. Système de capteur (400) selon l'une des revendications précédentes,
dans lequel l'unité de communication (102) comprend en outre ce qui suit :
une carte SIM (414), disposée pour établir une connexion de communication par le biais du réseau de communication mobile (130) ; et
au moins une des interfaces supplémentaires suivantes :
une interface Bluetooth (404, 408), en particulier une interface Bluetooth basse consommation (BLE),
une interface de navigation par satellite (416), en particulier une interface GPS ou une interface de système de positionnement par satellite.

12. Bicyclette dotée d'un système de capteur selon l'une des revendications 1 à 11.

13. Procédé (700) pour la saisie d'informations sur une bicyclette, avec les étapes suivantes :
saisie (701) d'une approche d'un aimant fixé sur une partie en rotation de la bicyclette près d'un capteur fixé sur une partie non en rotation de la bicyclette ;
saisie d'une approche d'un aimant fixé sur une deuxième partie en rotation de la bicyclette près d'un deuxième capteur fixé sur la partie non en rotation de la bicyclette ;
traitement (702) des informations saisies par une unité de communication (112) pouvant être montée sur la bicyclette (102) selon un profil prédéfini, dans lequel le profil prédéfini comprend les dimensions prédéfinies de la bicyclette, en particulier la circonférence des roues de la bicyclette ; et
transmission (703) par l'unité de communication (112) des informations traitées à un serveur par le biais d'un réseau de communication mobile (112),
dans lequel l'unité de communication (112) comprend ce qui suit :
une interface de capteur (122, 402) disposée pour transmettre à l'unité de communication (112) les informations saisies par le capteur (110) et le deuxième capteur (120), de manière filaire ou sans fil ;
un microcontrôleur (412), disposé pour traiter les informations reçues depuis l'interface de capteur (122) ; et
une interface de téléphonie mobile (134, 406) disposée pour transmettre les informations traitées par le microcontrôleur (412) par le réseau de communication mobile (130) ; et
dans lequel le capteur (110) et le deuxième capteur (120) sont intégrés dans l'unité de communication (112), laquelle peut être montée à une base à cadre de la bicyclette (102).
